# EUROPÄISCHE PATENTSCHRIFT

(11) **EP 1 521 640 B1**
(45) Veröffentlichungstag und Bekanntmachung des Hinweises auf die Patenterteilung: **09.08.2006**
(21) Anmeldenummer: 03735638.3
(22) Anmeldetag: 18.06.2003
(51) Int. Cl.: B05B 13/02, B62D 65/00

(54) **ANLAGE ZUM BESCHICHTEN VON GEGENST NDEN**
INSTALLATION FOR COATING OBJECTS
INSTALLATION POUR ENDUIRE DES OBJETS

(30) Priorität: 12.07.2002 DE 10231504
(43) Veröffentlichungstag der Anmeldung: 13.04.2005
(73) Patentinhaber: EISENMANN Maschinenbau GmbH & Co. KG, 71032 Böblingen (DE)
(72) Erfinder: HERWIG, Gernot, 71088 Holzgerlingen (DE); DOLL, Martin, 71093 Weil im Schönbuch (DE)
(74) Vertreter: Ostertag, Ulrich
(86) Internationale Anmeldenummer: PCT/EP2003/006403
(87) Internationale Veröffentlichungsnummer: WO 2004/007086

(56) Entgegenhaltungen:
- US-A- 4 831 962
- US-A- 5 720 817

## Beschreibung

Die Erfindung betrifft eine Anlage zum Beschichten von Gegenständen, insbesondere von Fahrzeugkarosserien und deren Teilen, mit
a) einer Beschichtungskabine, in welcher mindestens eine Applikationseinrichtung angeordnet ist;
b) einer der Beschichtungskabine nachgeschaltete Trocknerkabine;
c) einer Mehrzahl von Skids, welche zwei parallel zur Bewegungsrichtung verlaufende Skidkufen aufweisen und jeweils mindestens einen zu beschichtenden Gegenstand tragen;
d) einem Skidfördersystem, auf welchem die Skidkufen der Skids aufliegen und welches die Skids durch die Beschichtungskabine und die Trocknerkabine führt.

Beim Betreiben einer solchen Anlage ist es erforderlich, die zu beschichtenden Gegenstände auf den Skids so zu positionieren, daß die Applikationseinrichtungen alle zu beschichtenden Flächen erreichen können. Dies gelingt häufig nur dadurch, daß die aufeinander folgenden Skids voneinander einen verhältnismäßig großen Abstand aufweisen und/oder beweglich auf den Skids angeordnet sind. Große Abstände sind jedoch mit einer großen Anlagenlänge verbunden; die Bewegung von zu beschichtenden Gegenständen erfordert entsprechende apparative Einrichtungen oder Handarbeit. Beides führt zu entsprechend hohen Kosten.

Aufgabe der vorliegenden Erfindung ist es, eine Anlage der eingangs genannten Art derart auszugestalten, daß die Anlagenlänge und die hiermit verbundenen Kosten minimiert sind.

Diese Aufgabe wird erfindungsgemäß dadurch gelöst, daß
e) benachbarte Skids in dem Sinne ineinander fahrbar sind, daß sie sich in Bewegungsrichtung teilweise überlappen.

Während klassische Skids sich einander nur soweit annähern können, daß sie mit ihren Skidkufen aneinanderstoßen wie in Dokument us4831962 oder US55720817 offenbart wird ein erfindungsgemäßer Skid so gestaltet, daß er in einen benachbarten, in Bewegungsrichtung vor ihm oder hinter ihm liegenden Skid teilweise einfahren kann. Nur in der Beschichtungskabine werden die Skids so weit auseinandergefahren, also ein so großer Abstand zwischen ihnen hergestellt, daß alle Oberflächen der von den Skids getragenen Gegenstände von der Applikationseinrichtung erreicht werden können, ohne daß diese Gegenstände dabei bewegt zu werden brauchen. Sobald der jeweilige Skid jedoch die Beschichtungskabine verläßt, wird sein Abstand gegenüber dem vorauslaufenden Skid zunehmend verkleinert, bis schließlich sein vorauslaufender Bereich in den nachlaufenden Bereich des in Bewegungsrichtung vor ihm fahrenden Skids "eintaucht". Auf diese Weise entsteht eine Folge von Skids, deren Gesamtlänge kleiner als die Summe der Kufenlängen der in dem Gesamtverbund enthaltenen Skids ist. Das Ausmaß, in dem die benachbarten Skids ineinander fahren, wird so gewählt, daß sich die von den Skids getragenen, zu beschichtenden Gegenstände gegenseitig nicht berühren. Dabei lassen sich auch Anordnungen wählen, wo die von den Skids getragenen Gegenstände in der "ineinandergefahrenen" Position benachbarter Skids seitlich nebeneinander (bezogen auf die Bewegungsrichtung) angeordnet sind.

Aufgrund der geringen Gesamtlänge, den der Verbund von Skids in ineinandergefahrenem Zustand einnimmt, können die der Beschichtungskabine vor- und nachgeschalteten Anlagenkomponenten, insbesondere die Trocknerkabine, sehr kurz gehalten werden. Dies wirkt sich direkt auf die Kosten der Anlage aus.

Selbstverständlich bedingt die Eigenschaft der Skids, im o. g. Sinne ineinander fahrbar zu sein, eine besondere Bauweise: Diese kann beispielsweise so aussehen, daß die Skids eine Tragstruktur besitzen, die aufweist:
a) einen Tragrahmen, dessen parallel zur Bewegungsrichtung verlaufende Seiten von den beiden Skidkufen gebildet sind, wobei die erste Skidkufe über den Tragrahmen in Bewegungsrichtung nach vorne übersteht, während die zweite Skidkufe gegen die Bewegungsrichtung über den Tragrahmen nach hinten übersteht;
b) einen vorderen Träger, der mit dem Tragrahmen verbunden ist und parallel zur ersten Skidkufe nach vorne über den-Tragrahmen übersteht, jedoch von der ersten Skidkufe einen Abstand aufweist, der kleiner als der Abstand zwischen den beiden Skidkufen ist;
c) einen hinteren Träger, der mit dem Tragrahmen verbunden ist und parallel zur zweiten Skidkufe nach hinten über den Tragrahmen übersteht, jedoch von der zweiten Skidkufe einen Abstand aufweist, der kleiner als der Abstand zwischen den beiden Skidkufen ist.

Bei dieser Ausführungsform der erfindungsgemäßen Anlage besitzt jeder Skid also im vorderen und hinteren Bereich eine Art Traggabel, deren eine "Zinke" von einer Skidkufe und deren andere "Zinke" von einem parallel hierzu verlaufenden Träger gebildet ist. Die Traggabeln können aufgrund der Tatsache, daß der Abstand zwischen ihren "Zinken" kleiner als der Abstand zwischen den Skidkufen ist, ineinander einfahren. Die Skidkufen eines Skids sind bei dieser Ausgestaltung in Bewegungsrichtung gegeneinander versetzt. Jede Seite eines Skids ist also, für sich alleine betrachtet, nur über einen Teil der Skidlänge von der Skidkufe unterstützt; als ganzer betrachtet ruht aber der Skid überall über seine gesamte Länge hinweg zumindest auf einer Skidkufe.

Jeder Skid sollte Anschläge besitzen, die das Ausmaß bestimmen, in dem benachbarte Skids ineinander verfahrbar sind. Dieses Ausmaß hängt von den Gegenständen ab, die von den Skids getragen werden und die sich, nach dem oben Gesagten, in keinem Falle gegenseitig berühren dürfen.

Häufig sind die Verhältnisse so, daß ein "Mischbetrieb" der Anlage stattfindet. Dies bedeutet, daß aufeinander folgende Skids unterschiedliche zu beschichtende Gegenstände tragen. In diesem Falle ist diejenige Ausführungsform der Erfindung von Vorteil, bei welcher jeder Skid erste Anschläge, die das Ausmaß bestimmen, in dem benachbarte identische Gegenstände tragende Skids ineinander fahrbar sind, sowie zweite Anschläge, die das Ausmaß bestimmen, in dem benachbarte unterschiedliche Gegenstände tragende Skids ineinander fahrbar sind, besitzen. Zwischen in Bewegungsrichtung benachbarten Skids stellt sich auf diese Weise außerhalb der Beschichtungskabine immer das größtmögliche Ausmaß des "Ineinander-Fahrens" ein, bei der sich die geringstmögliche Gesamtlänge des Skidverbundes ergibt.

Die zweite Art von Anschlägen kann durch die Skidkufen und/oder die Träger gebildet sein.

Ein Ausführungsbeispiel der Erfindung wird nachfolgend anhand der Zeichnung näher erläutert; es zeigen:
- Figur 1:: in schematischer Draufsicht zwei erfindungsgemäße Skids, die unterschiedliche Gegenstände tragen, innerhalb einer Beschichtungskabine;
- Figur 2:: die beiden Skids der Figur 1 in ineinandergeschobenem Zustand außerhalb der Beschichtungskabine;
- Figur 3:: zwei Skids, welche beide dieselbe, erste Art von Gegenständen tragen, in ineinandergeschobenem Zustand;
- Figur 4:: zwei Skids, welche Gegenstände der ersten und einer anderen, zweiten Art tragen, ebenfalls in ineinandergeschobenem Zustand;
- Figur 5:: zwei Skids, welche beide dieselbe, zweite Art von Gegenständen tragen, in ineinandergeschobenem Zustand;
- Figur 6:: in schematischer Draufsicht einen Trockner, in dem eine Mehrzahl von unterschiedliche Gegenstände tragende Skids ineinandergeschoben dargestellt sind.

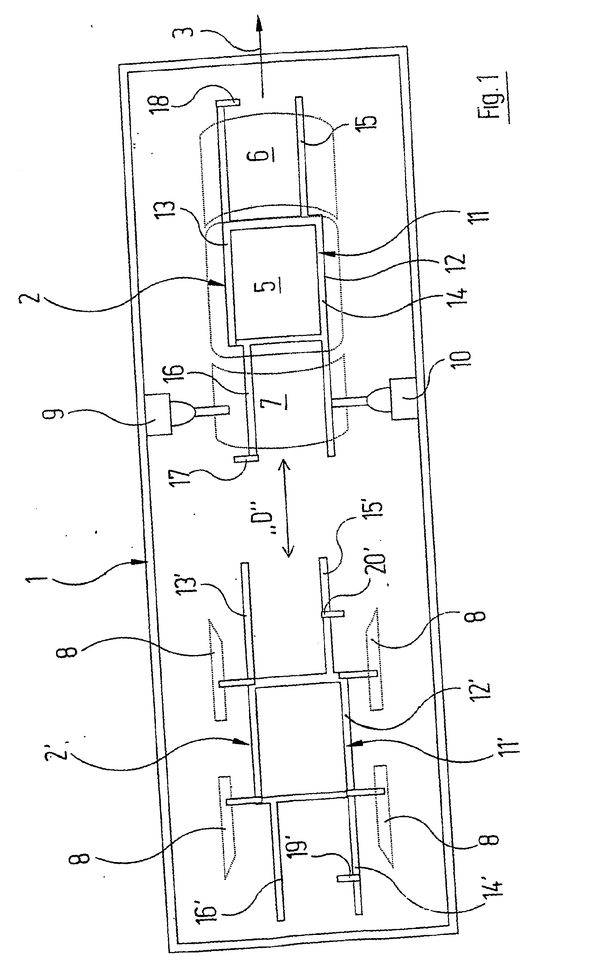

Zunächst wird auf Figur 1 Bezug genommen. Diese stellt in sehr schematischer Draufsicht eine Lackierkabine 1 dar, deren Kabinendach abgenommen ist. Im Inneren der Lackierkabine 1 sind zwei Skids 2, 2' erkennbar, deren Bauweise nachfolgend näher erläutert wird. Die beiden Skids 2, 2' werden in Abstand D voneinander mit Hilfe eines nicht dargestellten Skidförderersystems im Sinne des Pfeiles 3 durch die Lackierkabine 1 gefördert. Hierzu ist die Lackierkabine 1 selbstverständlich an ihren Schmalseiten mit entsprechenden, nicht dargestellten Türen versehen.

Der im Sinne des Pfeiles 3 vorausfahrende Skid 2 trägt Teile einer Fahrzeugkarosserie, nämlich das Dach 5 bzw. ein Teil des Daches, die Frontklappe 6 und die Heckklappe 7. Die Türen 8 der Fahrzeugkarosserie sind ausgehängt und werden getrennt von den Teilen 5, 6, 7 auf dem dem Skid 2 in Bewegungsrichtung (Pfeil 3) nachfolgendenen Skid 2' befördert.

Beim Durchgang durch die Lackierkabine 1 werden die Teile 5, 6, 7 und die getrennt beförderten Türen 8 von zwei Applikationseinrichtungen 9, 10 beschichtet, die auf gegenüberliegenden Seiten der Lackierkabine 1 angeordnet sind.

Beide Skids 2, 2' besitzen dieselbe Tragstruktur 11, 11', auf denen entsprechend den von ihnen getragenen Gegenständen unterschiedliche, spezifische Halteeinrichtungen angebracht sind, die in der Zeichnung nicht dargestellt sind. Nachfolgend wird die Tragstruktur 11 des Skids 2 beschrieben; diese Ausführungen gelten sinngemäß entsprechend für die Tragstruktur 11' des Skids 2':

Die Tragstruktur 11 besitzt einen mittleren, rechteckigen Rahmen 12, dessen in Bewegungsrichtung (Pfeil 3) linke Seite von einer Skidskufe 13 gebildet wird. Die Skidkufe 13 ragt in Bewegungsrichtung etwa um die Länge des Rahmens 12 über den Rahmen 12 über. Sie liegt unten auf den entsprechenden Förderelementen des Skidfördersystemes auf.

In entsprechender Weise wird die in Bewegungsrichtung rechte Seite des Rahmens 12 von einer zweiten Skidkufe 14 gebildet, die, erneut etwa um die Länge des Rahmens 12, von dem Rahmen 12 entgegen der Bewegungsrichtung (Pfeil 3) nach hinten übersteht.

Parallel zu der nach vorne überragenden Skidkufe 13 ist an die vordere Querseite des Rahmens 12 ein Profilträger 15 angesetzt, wobei jedoch der Abstand zwischen der Skidkufe 13 und dem Profilträger 15 kleiner als der Abstand zwischen den Skidkufen 13, 14 ist. In entsprechender Weise ist an die hintere Querseite des Rahmens 12 ein zweiter Profilträger 16 angesetzt, der sich parallel zur Skidkufe 14 (und damit auch parallel zur Skidkufe 13) erstreckt, erneut jedoch einen Abstand von der Skidkufe 14 aufweist, der kleiner als der Abstand zwischen den beiden Skidkufen 13, 14 ist.

Bei der geschilderten Bauweise sind die beiden Skidkufen 13, 14 gegeneinander in Bewegungsrichtung des Skids 2 um ein Drittel der Gesamtlänge des Skids 2 versetzt. Der Skid 2 ist also auf jeder Seite, für sich gesehen, nur über zwei Drittel seiner Länge unterstützt; durch die Versetzung der beiden Skidkufen 13, 14 gegeneinander ist gleichwohl der Skid 2 über seine gesamte Länge an dem darunter liegenden Skidfördersystem abgestützt.

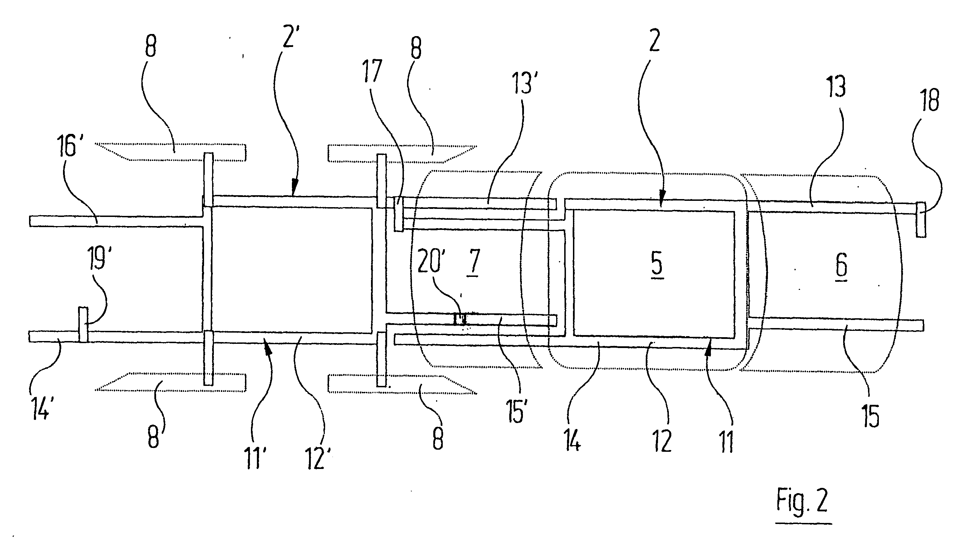

Innerhalb der Lackierkabine 1 nehmen die Skids 2, 2', wie dort dargestellt, einen Abstand D voneinander ein, so daß die Applikationseinrichtung 9, 10 alle zu lackierenden Flächen gut erreicht werden können, ohne daß bestimmte Gegenstände mit Hilfe von Robotern oder von Hand bewegt werden müssten. Wenn die Skids 2, 2' nur, wie bei den bekannten Konstruktionen üblich, auf den Abstand "null" zusammengefahren werden könnten, würde das die Anlage aufgrund ihrer größeren länge sehr verteuern. Aus diesem Grund sind die Skids 2, 2' außerhalb der Lackierkabine 1 in einem gewissen Ausmaße ineinander fahrbar, wie dies in Figur 2 dargestellt ist und nachfolgend im einzelnen erläutert wird.

Um das Ausmaß, in dem die Skids 2, 2' ineinander gefahren werden können, festzulegen, besitzen die Skids 2, 2' an den über den mittleren Rahmen 12, 12' herausragenden Bauteilen 13, 16 bzw. 14', 15' jeweils Anschläge 17, 18 bzw. 19' 20'.

Der die Teile 5, 6, 7 tragende Skid 2 besitzt am äußersten, vorauslaufenden Ende der Skidkufe 13 einen nach innen ragenden Anschlag 18 und am äußersten, nachlaufenden Ende des Profilträgers 16 einen nach außen ragenden Anschlag 17. Der die Türen 8 tragende Skid 2' besitzt zwischen den Enden des in Bewegungsrichtung vorauslaufenden Profilträgers 15' einen nach oben ragenden Anschlag 20' und in Abstand von dem nachlaufenden Ende der Skidkufe 12' einen nach innen ragenden Anschlag 19'.

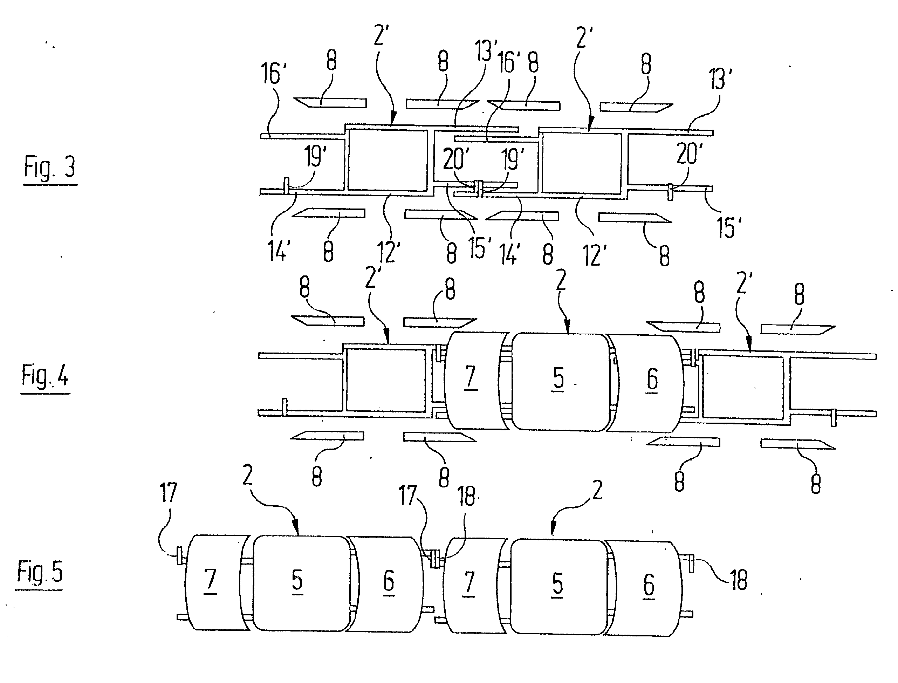

In welcher Weise diese Anschläge 17, 18, 19', 20' das Ineinanderschieben aufeinander folgender Skids 2, 2' begrenzen, wird aus den Figuren 3 bis 5 deutlich.

Zunächst sei auf Figur 4 Bezug genommen, welche den bisher anhand der Figuren 1 und 2 beschriebenen Fall betrifft, daß Skids 2, 2' aufeinander folgen, von denen die einen (2) jeweils die Teile 5, 6, 7 tragen, während die anderen (2') die zugehörigen Türen 8 mit sich führen. Diese Skids 2, 2' lassen sich, wie in den Figuren 2 und 4 dargestellt, soweit ineinanderschieben, bis die Enden der vorderen und hinteren Traggabeln benachbarter Skids 2, 2' an einer Querseite des Rahmens 12, 12' des benachbarten Skids 2, 2' anstoßen. Dies ist das äußerste Ausmaß, in dem die Skids 2, 2' ineinander gefahren werden können. Damit die von den Skids 2, 2' getragenen Gegenstände 5, 6, 7, 8 nicht miteinander in Berührung kommen, sind die Türen 8 auf den Skids 2' soweit seitlich nach außen gerückt, daß sie die Heckklappe 7 bzw. die Frontklappe 6 auf benachbarten Skids 2 jeweils seitlich überlappen können.

In Figur 3 ist eine Situation dargestellt, bei welcher ausschließlich Skids 2', welche Türen 8 tragen, aufeinander folgen. Hier treten die Anschläge 19' und 20' aufeinander folgender Skids 2' in Aktion. Wie Figur 3 zeigt, ist auf diese Weise eine Annäherung der aufeinander folgenden Skids 2' möglich, die nicht so weit geht wie die Annäherung der Skids 2, 2' in Figur 4. Auf diese Weise wird verhindert, daß die auf den Skids 2' angeordneten Türen 8 miteinander in Berührung kommen.

Figur 5 schließlich zeigt diejenige Situation, in der ausschließlich Skids 2 vorhanden sind, welche die Teile 5, 6, 7 tragen. In diesem Falle treten die jeweils endständigen Anschläge 17, 18 der Skids 2 in Aktion und verhindern, daß die die jeweiligen Rahmen 12 der Skids 2 überragenden Traggabeln 13, 14, 15, 16 ineinander eintauchen können, so daß erneut die aufeinander folgenden Teile 5, 6, 7, nicht aneinander anstoßen, gleichwohl aber der geringstmögliche Abstand zwischen aufeinander folgenden Skids 2 eingehalten wird.

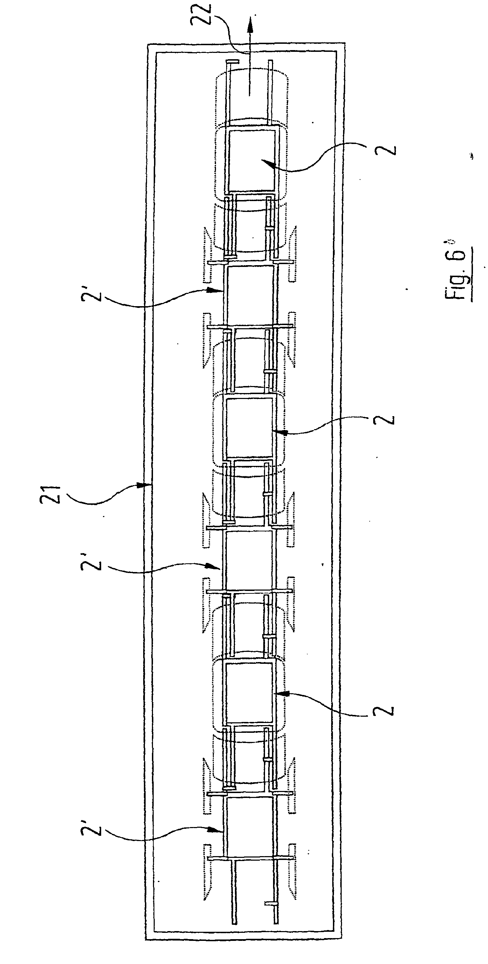

Figur 6 zeigt in einer schematischen Weise, ähnlich der Figur 1, die Verhältnisse in einer Trockenkabine, welche das Bezugszeichen 21 trägt. Das Dach der Trokkenkabine 21 ist wiederum abgenommen; auf diese Weise ist erkennbar, daß sich innerhalb der Trockenkabine 21 drei Türen 8 tragende Skids 2' und drei Skids 2, welche jeweils ein Teil 5, 6, 7 tragen, befinden. Diese Skids 2, 2' werden erneut mit Hilfe eines nicht dargestellten Skidfördersystemes in Richtung des Pfeiles 22 durch die Trockenkabine 21 bewegt, die hierzu mit nicht dargestellten Türen an ihren Schmalseiten versehen ist. Die Skids 2, 2' sind innerhalb der Trockenkabine 21 so weit wie möglich, entsprechend der Darstellung in den Figuren 2 und 4, ineinandergeschoben, so daß die Länge der Trockenkabine 21 in Bewegungsrichtung so klein wie möglich ist.

Die Vergrößerung des Abstandes zwischen aufeinanderfolgenden Skids 2, 2' wird durch Übergabe auf eine Strecke größerer Geschwindigkeit des Skidfördersystems, die Verkleinerung des Abstandes durch Übergabe auf eine Strecke kleinerer Geschwindigkeit erreicht.

## Patentansprüche

1. Anlage zum Beschichten von Gegenständen, insbesondere von Fahrzeugkarosserien und deren Teilen, mit
a) einer Beschichtungskabine, in welcher mindestens eine Applikationseinrichtung (9,10) angeordnet ist;
b) einer der Beschichtungskabine (1) nachgeschalteten Trocknerkabine;
c) einer Mehrzahl von Skids (2, 2'), welche zwei parallel zur Bewegungsrichtung verlaufende Skidkufen (13, 14) aufweisen und jeweils mindestens einen zu beschichtenden Gegenstand tragen;
d) einem Skidfördersystem, auf welchem die Skidkufen der Skids aufliegen und welches die Skids durch die Beschichtungskabine und die Trocknerkabine führt,
**dadurch gekennzeichnet, daß**
e) benachbarte Skids (2) in dem Sinne ineinander fahrbar sind, daß sie sich in Bewegungsrichtung teilweise überlappen.

2. Anlage nach Anspruch 1, **dadurch gekennzeichnet,**
**daß** die Skids (2) eine Tragstruktur (11) besitzen, die aufweist:
a) einen Tragrahmen (12, 12'), dessen parallel zur Bewegungsrichtung verlaufende Seiten von den beiden Skidkufen (13, 14) gebildet sind, wobei die erste Skidkufe (13) über den Tragrahmen (12) in Bewegungsrichtung nach vorne übersteht, während die zweite Skidkufe (14) gegen die Bewegungsrichtung über den Tragrahmen (12) nach hinten übersteht;
b) einen vorderen Träger, der mit dem Tragrahmen (12) verbunden ist und parallel zur ersten Skidkufe (13) nach vorne über den Tragrahmen (12) übersteht, jedoch von der ersten Skidkufe (13) einen Abstand aufweist, der kleiner als der Abstand zwischen den beiden Skidkufen (13, 14) ist;
c) einen hinteren Träger (16), der mit dem Tragrahmen (12) verbunden ist und parallel zur zweiten Skidkufe (14) nach hinten über den Tragrahmen (12) übersteht, jedoch von der zweiten Skidkufe (14) einen Abstand aufweist, der kleiner als der Abstand zwischen den beiden Skidkufen (13, 14) ist.

3. Anlage nach Anspruch 1 oder 2, **dadurch gekennzeichnet,**
**daß** jeder Skid (2) Anschläge (17, 18, 19', 20') besitzt, die das Ausmaß bestimmen, in dem benachbarte Skids (2) ineinander fahrbar sind.

4. Anlage nach Anspruch 3, **dadurch gekennzeichnet, daß**
jeder Skid (2) erste Anschläge (17, 18, 19', 20'), die das Ausmaß bestimmen, in dem benachbarte identische Gegenstände (5, 6, 7, 8) tragende Skids (2) ineinander fahrbar sind, sowie zweite Anschläge (13 bis 16, 13' bis 16'), die das Ausmaß bestimmen, in dem benachbarte unterschiedliche Gegenstände (5, 6, 7, 8) tragende Skids (2, 2') ineinander fahrbar sind, besitzen.

5. Anlage nach Anspruch 4 , **dadurch gekennzeichnet,**
**daß** die zweiten Anschläge durch die Skidkufen (13, 14, 13', 14') und/oder die Träger (15, 16, 15', 16') gebildet sind.

## Claims

1. Installation for coating objects, in particular vehicle bodies and parts thereof, comprising
a) a coating booth, in which at least one application device (9, 10) is arranged;
b) a drying booth downstream of the coating booth (1);
c) a plurality of skids (2, 2') having two skid runners (13, 14) which run parallel to the movement direction and each carrying at least one object to be coated;
d) a skid-conveying system, on which the skid runners of the skids rest and which guides the skids through the coating booth and the drying booth,
**characterised in that**
e) adjacent skids (2) are movable into one another such that they partially overlap in the movement direction.

2. Installation according to claim 1, **characterised in that** the skids (2) have a supporting structure (11) comprising:
a) a supporting frame (12, 12'), of which the sides running parallel to the movement direction are formed by the two skid runners (13, 14), the first skid runner (13) projecting forwards beyond the supporting frame (12) in the movement direction, while the second skid runner (14) projects rearwards beyond the supporting frame (12) counter to the movement direction;
b) a front support, which is connected to the supporting frame (12) and projects forwards beyond the supporting frame (12) parallel to the first skid runner (13), but is at a distance from the first skid runner (13) which is less than the distance between the two skid runners (13, 14);
c) a rear support (16), which is connected to the supporting frame (12) and projects rearwards beyond the supporting frame (12) parallel to the second skid runner (14), but is at a distance from the second skid runner (14) which is less than the distance between the two skid runners (13, 14).

3. Installation according to claim 1 or 2, **characterised in that** each skid (2) has stops (17, 18, 19', 20') which define the extent to which adjacent skids (2) are movable into another.

4. Installation according to claim 3, **characterised in that** each skid (2) has first stops (17, 18, 19', 20'), which define the extent to which adjacent skids (2) carrying identical objects (5, 6, 7, 8) are movable into one another, and second stops (13 to 16, 13' to 16'), which define the extent to which adjacent skids (2, 2') carrying different objects (5, 6, 7, 8) are movable into one another.

5. Installation according to claim 4, **characterised in that** the second stops are formed by the skid runners (13, 14, 13', 14') and/or the supports (15, 16, 15', 16').

## Revendications

1. Installation pour appliquer un revêtement sur des objets, notamment des carrosseries de véhicules automobiles et leurs pièces, comprenant :
a) une cabine de revêtement dans laquelle se trouve au moins un dispositif d'application (9, 10) ;
b) une cabine de séchage faisant suite à la cabine de revêtement (1) ;
c) plusieurs chariots (2, 2') qui présentent des patins (13, 14) s'étendant parallèlement à la direction de déplacement et qui portent chacun au moins un objet à revêtir ;
d) un système de transport des chariots sur lequel reposent les patins des chariots et qui transporte les chariots à travers la cabine de revêtement et la cabine de séchage,
**caractérisée en ce que**
e) des chariots voisins (2) peuvent être encastrés l'un dans l'autre de telle sorte qu'ils se chevauchent en partie dans la direction de transport.

2. Installation selon la revendication 1, **caractérisée en ce que** les chariots (2) possèdent une structure porteuse (11) qui présente :
a) un cadre de support (12, 12') dont les côtés s'étendant parallèlement à la direction de déplacement sont formés par les deux patins (13, 14), le premier patin (13) faisant saillie de l'avant du cadre de support (12) et pointant dans le sens de déplacement, tandis que le second patin (14) fait saillie de l'arrière du cadre de support (12) et pointe dans le sens inverse au sens de déplacement ;
b) un longeron avant relié au cadre de support (12) et faisant saillie de l'avant du cadre de support (12), parallèlement au premier patin (13), mais éloigné du premier patin (13) d'une distance qui est inférieure à la distance qui sépare les deux patins (13, 14) ;
c) un longeron arrière (16) relié au cadre de support (12) et faisant saillie de l'arrière du cadre de support (12), parallèlement au second patin (14), mais éloigné du second patin (14) d'une distance qui est inférieure à la distance qui sépare les deux patins (13, 14).

3. Installation selon la revendication 1 ou 2, **caractérisée en ce que** chaque chariot (2) possède des butées (17, 18, 19', 20') qui déterminent la distance sur laquelle deux chariots voisins (2) peuvent être encastrés l'un dans l'autre.

4. Installation selon la revendication 3, **caractérisée en ce que** chaque chariot (2) possède des premières butées (17, 18, 19', 20') qui déterminent la distance sur laquelle deux chariots voisins (2) portant des objets identiques (5, 6, 7, 8) peuvent être encastrés l'un dans l'autre, et des secondes butées (13 à 16, 13' à 16') qui déterminent la distance sur laquelle deux chariots voisins (2) portant des objets différents (5, 6, 7, 8) peuvent être encastrés l'un dans l'autre.

5. Installation selon la revendication 4, **caractérisée en ce que** les secondes butées sont formées par les patins (13, 14, 13', 14') et/ou les longerons (15, 16, 15', 16').
